# EUROPEAN PATENT APPLICATION

(11) **EP 0 577 221 A1**
(43) Date of publication of application: **05.01.1994**
(21) Application number: 93201928.4
(22) Date of filing: 01.07.1993
(51) Int. Cl.: B60R 11/02

(54) **Device for mounting loudspeakers in a car**

(30) Priority: 03.07.1992 IT VE920020 U
(71) Applicant: ALFA ELETTRONICA SNC di Silvano Zorzetto & C., I-36016 Thiene (Vicenza) (IT)
(72) Inventor: Formilan, Archimede, I-36010 Zanè (Vicenza) (IT)
(74) Representative: Dragotti, Gianfranco

(57) **Abstract**

Support member for loudspeakers for audio sets, in particular suitable for the mounting in the loading platform of the luggage bay of cars comprising two superimposed panels (1,2), spaced from each other to form a hollow space with a housing seat (4) for a loudspeaker (5); the upper panel (2) is provided with at least an opening (6) laterally staggered with respect to the loudspeaker (5) and in free communication with the upper surface of the loudspeaker (5).

## Description

The present invention relates to a support member for loud-speakers for car audio sets, in particular suitable for the mounting in the loading platform of the car luggage bay.

It is known that the low frequency loud-speaker of the audio set requires a great volume of air to be able to effectively diffuse sound. Nowadays, in car audio sets, this loud-speaker is mounted in the car rear platform, or on a support, inside the luggage bay. This support is shaped according to this luggage bay and usually covers the spare wheel.

A drawback common to both these applications is that the complete use of the platform or of the luggage bay surface is prevented since the items sometimes placed thereupon hinder the sound diffusion.

Object of the invention is to eliminate this drawback and to provide a support member for loud-speakers permitting an effective sound diffusion.

This object is achieved according to the invention with a support member for loud-speakers characterized in that it comprises two superimposed panels, spaced from each other to form a hollow space, the lower panel including a housing seat for the conic portion of the loud-speaker, the upper panel, in addition to the possible and usual opening aligned with the upper surface of the loud-speaker, being provided with at least an opening laterally staggered with respect to the alignment with said upper surface of the loud-speaker, said staggered opening being in free communication with said upper surface of the loud-speaker through said hollow space.

The present invention will be furthermore explained hereinafter with reference to the enclosed sheets of drawings, in which:

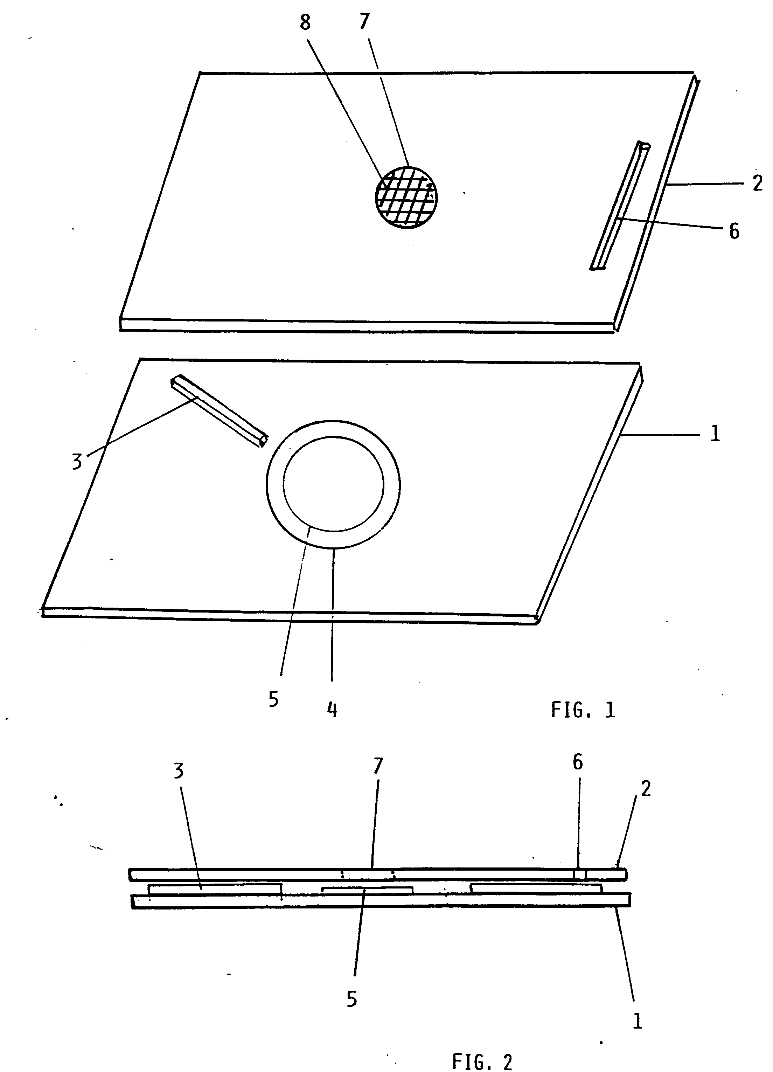

- figure 1 shows in an exploded perspective view a support member according to the invention;
- figure 2 shows the same in a longitudinal cross-section view;
- figure 3 is a schematic perspective view of the rear part of a car in which the support member is mounted.

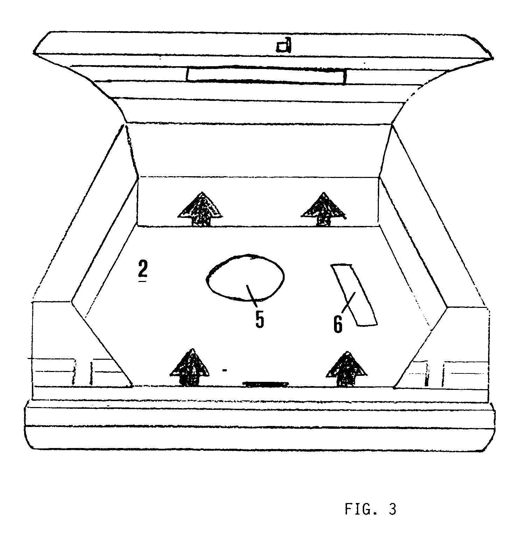

As it is seen from the figures the support member according to the invention essentially comprises a lower panel 1 and an upper panel 2, superimposed to each other, cut out by means of an electronic pantograph or by means of molding according to the surface of the loading platform of the luggage bay on which they will be mounted as illustrated in figure 3.

The two panels are spaced apart one from the other by a hollow space (for instance about 1 cm. or different according to the type of the car) and are connected to each other through a plurality of stiffening lists 3.

The said panels may be made in wood, fiberglass-reinforced plastic, polyurethane foam, polymers of various kinds or metals.

The lower panel 1 is provided with a circular seat 4 for inserting the loud-speaker 5 that will downwardly project from the panel itself, whereas the upper panel 2 is provided with a longitudinal slit 6 extending parallely to one of the minor edges of the panel.

The choice of the position of the longitudinal slit 6 is made depending on the shape of the upper panel 2 and must at any rate permit a free communication, inside the hollow space defined by the two panels, between the sound emission surface of the loud-speaker and the slit itself.

The upper panel is also provided with a further opening 7 arranged over the opening 4 and provided with a grid 8.

From the above it is clear that the support member in accordance with the invention permits the loud-speaker to be mounted in the luggage bay without however preventing the use of the loading platform because the latter is covered by the upper panel 2 which moreover permits an effective sound diffusion through the longitudinal slit 6 and also by the hollow space.

It is well understood that mechanically equivalent modifications and variations are possible and foreseeable without falling out of the scope of the invention. For instance, instead of a longitudinal slit 6 it is possible to provide an opening having a different shape, or it is possible to provide more than one slit preferably placed along the side edge of the upper panel, each slit being possibly covered with a protection grid.

## Claims

1. Support member for car loud-speakers characterized in that it comprises two superimposed panels (1,2), spaced from each other to form a hollow space, the lower panel (1) including a housing seat (4) for the conic portion of the loud-speaker (5), the upper panel (2), in addition to the possible and usual opening (7) aligned with the upper surface of the loud-speaker (5), being provided with at least an opening (6) laterally staggered with respect to the alignment with said upper surface of the loud-speaker (5), said staggered opening (6) being in free communication with said upper surface of the loud-speaker (5) through said hollow space.

2. Support member according to claim 1 characterized in that the two panels (1,2) are shaped according to the surface of the loading platform of the luggage bay.

3. Support member according to claim 2 characterized in that the two panels (1,2) are spaced by stiffening lists (3).

4. Support member according to claim 2 characterized in that the upper panel (2) is provided with an opening (7) arranged over the housing seat (4) of the loud-speaker provided in the lower panel.

5. Support member according to claim 4 characterized in that the opening (7) is covered by a grid (8).

6. Support member according to claim 2 characterized in that the openings (6) are formed along the edges of the upper panel (2).
